# EUROPEAN PATENT SPECIFICATION

(11) **EP 3 905 768 B1**
(45) Date of publication and mention of the grant of the patent: **20.11.2024**
(21) Application number: 18945121.4
(22) Date of filing: 27.12.2018
(51) Int. Cl.: H04W 28/04, H04W 4/46, H04W 72/04, H04W 92/18, H04L 1/18

(54) **TERMINAL AND COMMUNICATION METHOD**
ENDGERÄT UND VERFAHREN ZUR KOMMUNIKATION
TERMINAL ET PROCÉDÉ DE COMMUNICATION

(43) Date of publication of application: 03.11.2021
(73) Proprietor: NTT DOCOMO, INC., Chiyoda-ku Tokyo 100-6150 (JP)
(72) Inventor: YOSHIOKA, Shohei, Tokyo 100-6150 (JP); NAGATA, Satoshi, Tokyo 100-6150 (JP); WANG, Huan, Beijing, 100190 (CN)
(74) Representative: Hoffmann Eitle
(86) International application number: PCT/JP2018/048385
(87) International publication number: WO 2020/136855

(56) References cited:
- JP-A- 2015 502 084
- XIAOMI COMMUNICATIONS: "On support of HARQ for V2x communications", vol. RAN WG1, no. Spokane, USA; 20181112 - 20181116, 2 November 2018 (2018-11-02), XP051479586, Retrieved from the Internet <URL:http://www.3gpp.org/ftp/tsg%5Fran/WG1%5FRL1/TSGR1%5F95/Docs/R1%2D1813287%2Ezip> [retrieved on 20181102]
- HUAWEI ET AL: "Discussion on HARQ support for NR sidelink", vol. RAN WG2, no. Spokane, USA;, 2 November 2018 (2018-11-02), XP051482073, Retrieved from the Internet <URL:http://www.3gpp.org/ftp/tsg%5Fran/WG2%5FRL2/TSGR2%5F104/Docs/R2%2D1818198%2Ezip> [retrieved on 20181102]
- HUAWEI ET AL: "Design and contents of PSCCH and PSFCH", vol. RAN WG1, no. Spokane, USA; 20181112 - 20181116, 11 November 2018 (2018-11-11), XP051555609, Retrieved from the Internet <URL:http://www.3gpp.org/ftp/Meetings%5F3GPP%5FSYNC/RAN1/Docs/R1%2D1813554%2Ezip> [retrieved on 20181111]
- XIAOMI COMMUNICATIONS: "On support of HARQ for V2x communications", 3GPP TSG-RAN WG1 MEETING #95 R1-1813287, 2 November 2018 (2018-11-02), pages 1 - 2, XP051479586
- HUAWEI ET AL.: "Discussion on HARQ support for NR sidelink", 3GPP TSG-RAN WG2 MEETING #104 R2-1818198, 2 November 2018 (2018-11-02), pages 1 - 4, XP051482073

## Description

### TECHNICAL FIELD

The present invention relates to a terminal and a method in a radio communication system.

### BACKGROUND ART

In LTE (Long Term Evolution) and succeeding systems of LTE (e.g., LTE-A (LTE-Advanced), NR (New Radio) (also referred to as 5G)), D2D (Device to Device) technology has been considered for executing direct communication between user apparatuses without an intervening base station apparatus (see, for example, Non-patent document 1).

D2D reduces traffic between user apparatuses and base station apparatuses, and enables communication between user apparatuses when base station apparatuses become incapable of executing communication in the event of a disaster or the like. Note that although D2D is referred to as "sidelink" in the 3GPP (3rd Generation Partnership Project), a more general term D2D is used in the present description. However, "sidelink" may also be used as necessary in the description of embodiments, which will be described later.

D2D communication is generally classified into D2D discovery to find another user terminal that is ready to communicate, and D2D communication for direct communication between terminals (also referred to as D2D direct communication, D2D communication, "direct communication between terminals", etc.). In the following, when D2D communication, D2D discovery, and the like are not distinguished in particular, these may be simply referred to as D2D. Also, a signal transmitted and received in D2D will be referred to as a D2D signal. Various use cases of services related to V2X (Vehicle to Everything) in NR have been considered (e.g., Non-Patent Document 2).

### RELATED ART DOCUMENT

### [NON-PATENT DOCUMENT]

NON-PATENT DOCUMENT 1: 3GPP TS 36.211 V15.3.0(2018-09)
NON-PATENT DOCUMENT 2: 3GPP TR 22.886 V15.1.0(2017-03)
XIAOMI COMMUNICATIONS: "On support of HARQ for V2x communications", R1-1813287, relates to a design to support HARQ for sidelink unicast/groupcast transmission.

### SUMMARY OF THE INVENTION

### PROBLEM TO BE SOLVED BY THE INVENTION

Direct communication between terminals in NR-V2X is under consideration to support HARQ (Hybrid automatic repeat request). However, HARQ processing was not supported in conventional direct communication between terminals.

The present invention has been made in view of the above points, and has an object to appropriately perform retransmission control in direct communication between terminals.

### MEANS FOR SOLVING THE PROBLEM

The object of the invention is achieved by the subject-matter of the independent claims. Advantageous embodiments are defined in the dependent claims. Further examples are provided for facilitating the understanding of the invention.

### EFFECT OF THE PRESENT INVENTION

According to the disclosed technology, retransmission control can be appropriately performed in direct communication between terminals.

### BRIEF DESCRIPTION OF THE DRAWINGS

FIG. 1 is a diagram for describing V2X;
FIG. 2 is a diagram illustrating an example (1) of a transmission mode of V2X;
FIG. 3 is a diagram illustrating an example (2) of a transmission mode of V2X;
FIG. 4 is a diagram illustrating an example (3) of a transmission mode of V2X;
FIG. 5 is a diagram illustrating an example (4) of a transmission mode of V2X;
FIG. 6 is a diagram illustrating an example (5) of a transmission mode of V2X;
FIG. 7 is a diagram illustrating an example (1) of a communication type of V2X;
FIG. 8 is a diagram illustrating an example (2) of a communication type of V2X;
FIG. 9 is a diagram illustrating an example (3) of a communication type of V2X;
FIG. 10 is a diagram illustrating an example (1) of resource designation related to a HARQ according to an embodiment of the present invention;
FIG. 11 is a diagram illustrating an example (2) of resource designation related to a HARQ according to an embodiment of the present invention;
FIG. 12 illustrates PUCCH formats;
FIG. 13 is a diagram illustrating an example (1) of a HARQ response according to an embodiment of the present invention;
FIG. 14 is a diagram illustrating an example (2) of a HARQ response according to an embodiment of the present invention;
FIG. 15 is a diagram illustrating an example (3) of a HARQ response according to an embodiment of the present invention;
FIG. 16 is a diagram illustrating an example of a functional configuration of a base station apparatus 10 according to an embodiment of the present invention;
FIG. 17 is a diagram illustrating an example of a functional configuration of a user apparatus 20 according to an embodiment of the present invention; and
FIG. 18 is a diagram illustrating an example of a hardware configuration of a base station apparatus 10 or a user apparatus 20 according to an embodiment of the present invention.

### EMBODIMENTS FOR CARRYING OUT THE INVENTION

In the following, embodiments of the present invention will be described with reference to the drawings. Note that an embodiment described below merely presents an example, and an embodiment to which the present invention is applied is not limited to the following embodiments.

When operating a radio communication system of an embodiment of the present invention, existing technologies may be used appropriately. Here, the existing technology may be, for example, an existing LTE, but is not limited to the existing LTE. Also, the term "LTE" used in the present description, unless otherwise stated, has a broad meaning that includes methods of LTE-Advanced, those subsequent to LTE-Advanced (e.g., NR), and wireless LANs (Local Area Network).

In an embodiment of the present invention, the duplex method may be a TDD (Time Division Duplex) method, an FDD (Frequency Division Duplex) method, or any other method (e.g., Flexible Duplex, etc.) .

Also, in an embodiment of the present invention, stating that a radio parameter or the like is set (configured) may mean that a predetermined value is set in advance (preconfigured), or that a radio parameter indicated by a base station apparatus 10 or a user apparatus 20 is set.

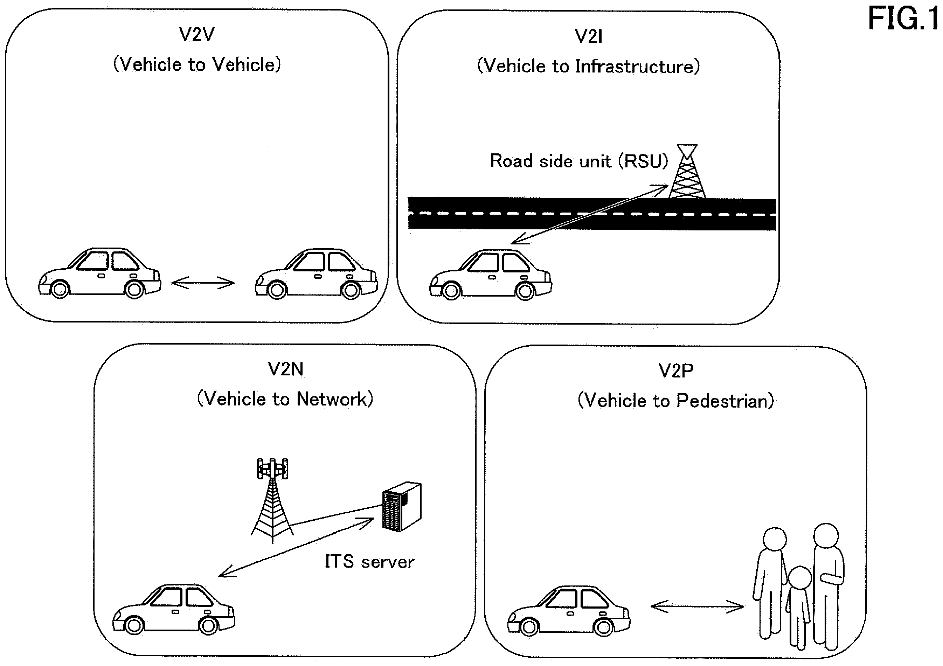

FIG. 1 is a diagram for describing V2X. In the 3GPP, implementation of V2X (Vehicle to Everything) or eV2X (enhanced V2X) has been considered by extending the D2D functions, to establish the specification. As illustrated in FIG. 1, V2X is a part of ITS (Intelligent Transport Systems), which is a generic term of V2V (Vehicle to Vehicle) meaning a form of communication executed between vehicles; V2I (Vehicle to Infrastructure) meaning a form of communication executed between a vehicle and a roadside unit (RSU); V2N (Vehicle to Network) meaning a form of communication executed between a vehicle and an ITS server; and V2P (Vehicle to Pedestrian) meaning a form of communication executed between a vehicle and a mobile terminal held by a pedestrian.

Also, in the 3GPP, V2X that uses cellular communication and communication between terminals of LTE or NR has been considered. V2X using cellular communication is also referred to as cellular V2X. In V2X of NR, studies are underway to implement high capacity, low latency, high reliability, and QoS (quality of service) control.

In the future, V2X of LTE or NR may be studied in a way not limited by the 3GPP specifications. For example, studies may take place in ensuring interoperability; lowering the cost by implementing an upper layer; combining or switching multiple RAT (Radio Access Technologies); consideration for regulations in respective countries; obtaining and delivering data on V2X platforms of LTE or NR; database management; and use methods.

In an embodiment of the present invention, although a form of a communication device installed on a vehicle is mainly assumed, the embodiment of the present invention is not limited to such a form. For example, the communication device may be a terminal held by a person; the communication device may be a device installed on a drone or an airplane; or the communication device may be a base station, an RSU, a relay node, or a user apparatus having scheduling capability.

Note that SL (sidelink) may be differentiated based on either UL (uplink) or DL (downlink), and one of or a combination of the following 1) to 4). Also, SL may be replaced with another term. 1) Resource arrangement in the time domain
2) Resource arrangement in the frequency domain
3) Reference synchronization signal (including SLSS (Sidelink Synchronization Signal))
4) Reference signal used for path loss measurement for controlling transmission power

Also, for OFDM (Orthogonal Frequency Division Multiplexing) of SL or UL, one of CP-OFDM (Cyclic-Prefix OFDM), DFT-S-OFDM (Discrete Fourier Transform-Spread-OFDM), OFDM without transform precoding, and OFDM with transform precoding may be applied.

In SL of LTE, Mode 3 and Mode 4 are specified for resource allocation of SL to a user apparatus 20. In Mode 3, transmission resources are dynamically allocated by DCI (Downlink Control Information) transmitted from a base station apparatus 10 to a user apparatus 20. Further, in Mode 3, SPS (Semi-Persistent Scheduling) is also possible. In Mode 4, a user apparatus 20 autonomously selects transmission resources from a resource pool.

Note that a slot in an embodiment of the present invention may be read as a symbol, a mini slot, a subframe, a wireless frame, or a TTI (Transmission Time Interval). Also, a cell in an embodiment of the present invention may be read as a cell group, a carrier component, a BWP, a resource pool, a resource, RAT (Radio Access Technology), a system (including a wireless LAN), or the like.

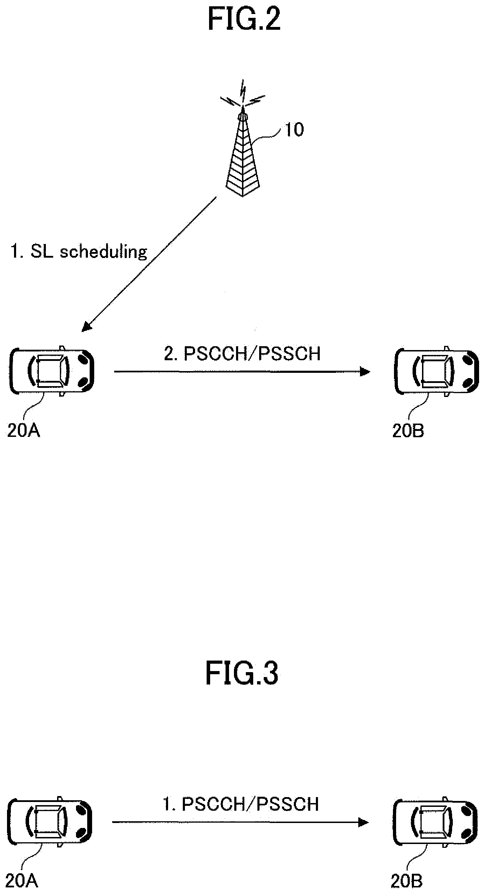

FIG. 2 is a diagram illustrating an example (1) of a transmission mode of V2X. In the transmission mode of sidelink communication illustrated in FIG. 2, at Step 1, the base station apparatus 10 transmits sidelink scheduling to the user apparatus 20A. Next, the user apparatus 20A transmits a PSCCH (Physical Sidelink Control Channel) and a PSSCH (Physical Sidelink Shared Channel) to the user apparatus 20B based on the received scheduling (Step 2). The transmission mode of the sidelink communication illustrated in FIG. 2 may be referred to as sidelink transmission mode 3 in LTE. In the sidelink transmission mode 3 in LTE, Uu-based sidelink scheduling is performed. Uu is a wireless interface between UTRAN (Universal Terrestrial Radio Access Network) and UE (User Equipment). Note that the transmission mode of the sidelink communication illustrated in FIG. 2 may be referred to as sidelink transmission mode 1 in NR.

FIG. 3 is a diagram illustrating an example (2) of a transmission mode of V2X. In the transmission mode of sidelink communication illustrated in FIG. 3, at Step 1, the user apparatus 20A transmits a PSCCH and a PSSCH to the user apparatus 20B using autonomously selected resources. The transmission mode of the sidelink communication illustrated in FIG. 3 may be referred to as sidelink transmission mode 4 in LTE. In the sidelink transmission mode 4 in LTE, the user apparatus 20A performs selection of resources by itself.

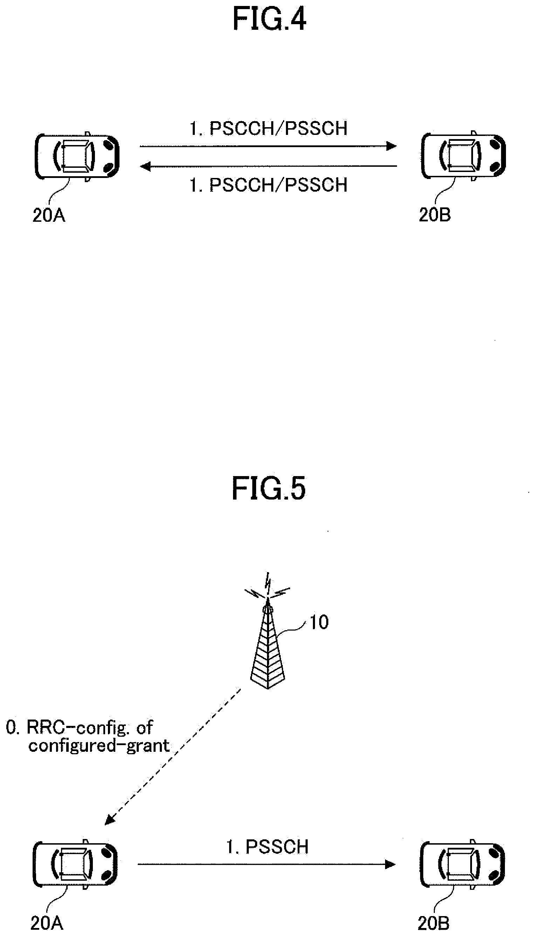

FIG. 4 is a diagram illustrating an example (3) of a transmission mode of V2X. In the transmission mode of sidelink communication illustrated in FIG. 4, at Step 1, the user apparatus 20A transmits a PSCCH and a PSSCH to the user apparatus 20B using autonomously selected resources. Similarly, the user apparatus 20B transmits PSCCH and PSSCH to the user apparatus 20A using autonomously selected resources (Step 1). The transmission mode of the sidelink communication illustrated in FIG. 4 may be referred to as sidelink transmission mode 2a in NR. In the sidelink transmission mode 2 in NR, the user apparatus 20 that transmits the PSCCH and PSSCH performs selection of resources by itself.

FIG. 5 is a diagram illustrating an example (4) of a transmission mode of V2X. In the transmission mode of sidelink communication illustrated in FIG. 5, at Step 0, the base station apparatus 10 transmits a sidelink scheduling grant to the user apparatus 20A via an RRC (Radio Resource Control) configuration. Next, the user apparatus 20A transmits a PSSCH to the user apparatus 20B based on the received scheduling (Step 1). Alternatively, the user apparatus 20A transmits the PSSCH to the user apparatus 20B based on a configuration defined in advance in the specification. The transmission mode of the sidelink communication illustrated in FIG. 5 may be referred to as sidelink transmission mode 2c in NR.

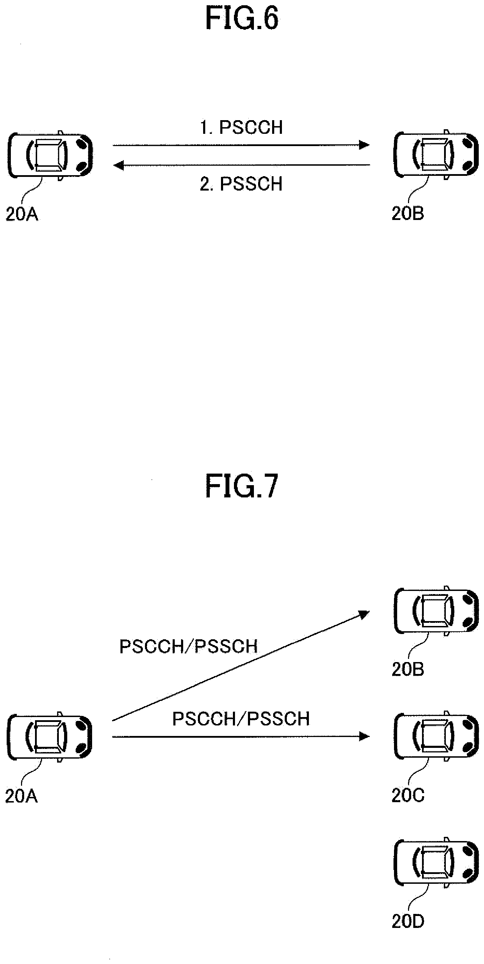

FIG. 6 is a diagram illustrating an example (5) of a transmission mode of V2X. In the transmission mode of sidelink communication illustrated in FIG. 6, at Step 1, the user apparatus 20A transmits sidelink scheduling to the user apparatus 20B via the PSCCH. Next, the user apparatus 20B transmits the PSSCH to the user apparatus 20A based on the received scheduling (Step 2). In other words, one user apparatus 20 performs scheduling of another user apparatus 20. The transmission mode of the sidelink communication illustrated in FIG. 6 may be referred to as sidelink transmission mode 2d in NR.

FIG. 7 is a diagram illustrating an example (1) of a communication type of V2X. The type of sidelink communication illustrated in FIG. 7 is a unicast. The user apparatus 20A transmits a PSCCH and a PSSCH to the user apparatus 20. In the example illustrated in FIG. 7, the user apparatus 20A performs unicasting to the user apparatus 20B and performs unicasting to the user apparatus 20C.

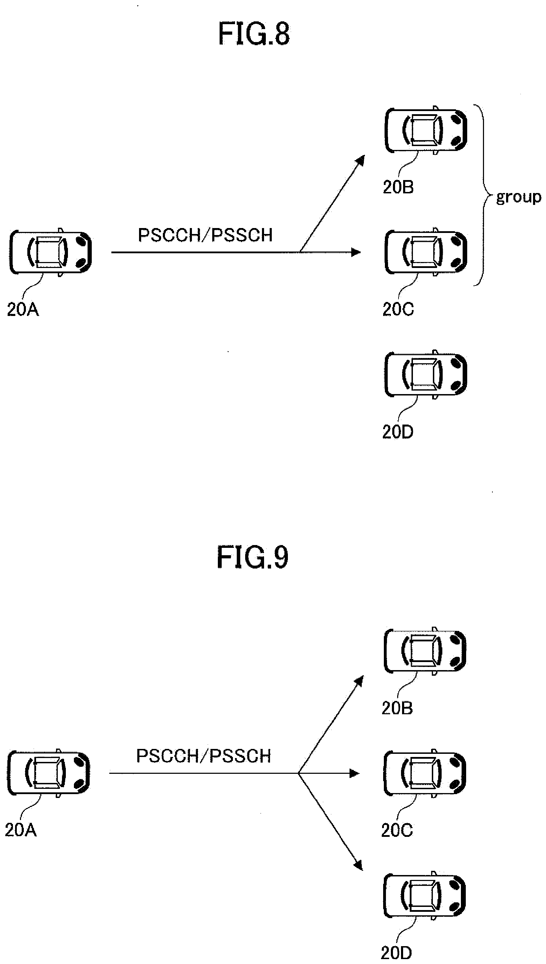

FIG. 8 is a diagram illustrating an example (2) of a communication type of V2X. The type of sidelink communication illustrated in FIG. 8 is a groupcast. The user apparatus 20A transmits a PSCCH and a PSSCH to a group to which one or more user apparatuses 20 belong. In the example illustrated in FIG. 8, the group includes the user apparatus 20B and the user apparatus 20C, and the user apparatus 20A performs groupcasting to the group.

FIG. 9 is a diagram illustrating an example (3) of a communication type of V2X. The type of sidelink communication illustrated in FIG. 9 is a broadcast. The user apparatus 20A transmits a PSCCH and a PSSCH to one or more user apparatuses 20. In the example illustrated in FIG. 9, the user apparatus 20A performs broadcasting to the user apparatus 20B, the user apparatus 20C, and the user apparatus 20D.

Also, in NR-V2X, HARQ is supported for unicasting and groupcasting in the sidelink. Further, in NR-V2X, SFCI (Sidelink Feedback Control Information) including the HARQ response is defined. Further, SFCI transmission via the PSFCH (Physical Sidelink Feedback Channel) is under consideration.

However, it has not been clarified how a PSFCH configuration and a PSFCH used in a HARQ response are indicated to the user apparatus 20.

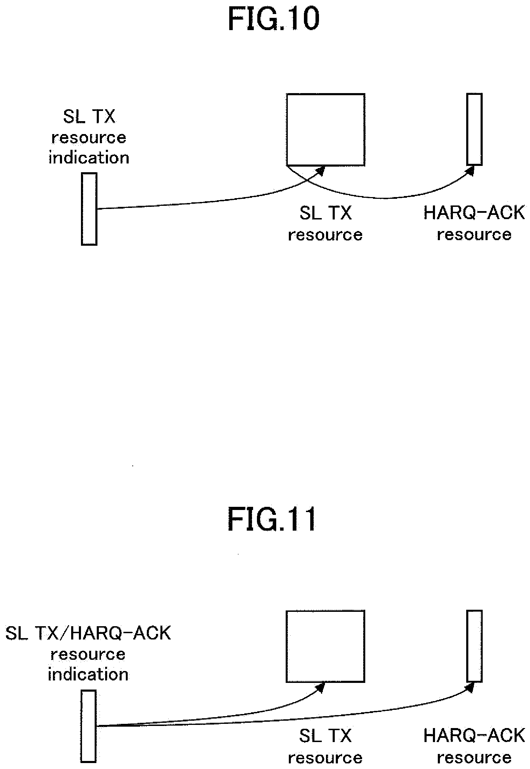

FIG. 10 is a diagram illustrating an example (1) of resource designation related to a HARQ according to an embodiment of the present invention. As illustrated in FIG. 10, a SL transmission resource may be associated with a HARQ response resource of the SL. The HARQ response resource of the SL may be specified based on the position of the SL transmission resource in the time domain, frequency domain, or code domain. Alternatively, the HARQ response resource of the SL may be specified based on the position of signaling that schedules the SL transmission resource in the time domain, frequency domain, or code domain. The HARQ response resource may be a PSFCH.

FIG. 11 is a diagram illustrating an example (2) of resource designation related to a HARQ according to an embodiment of the present invention. As illustrated in FIG. 11, a SL HARQ response resource and the SL transmission resource associated therewith may be simultaneously indicated by signaling to schedule an SL transmission resource. The HARQ response resource may be a PSFCH.

The code domain or frequency domain of the HARQ response resource of the SL may be specified by the following methods 1) to 5).

1) The index of the HARQ response resource is indicated implicitly. The index of HARQ response resource may be identified based on, for example, a minimum CCE (Control Channel Element), CORESET (Control Resource Set) index, SL scheduling position, or DCI (PDCCH) that indicates a HARQ response resource. In other words, a method of determining a DL-HARQ response resource of LTE may be used for determining the SL-HARQ response resource. Alternatively, signaling, parameters, or the like related to a DL-HARQ response resource of LTE may be used. For example, the SCI (Sidelink Control Information) payload size, the position of the TPC (Transmit Power Control) command, the common search space, and PSSCH resources may be determined similarly to the DL-HARQ of LTE.
2) The HARQ response resource may be defined by a fixed association. The starting and ending positions of a PSSCH, and SCI of a PSCCH associated with a PSCCH or SCI of a PSCCH that performs SL scheduling may have a fixed association with the HARQ response resource. In other words, the subchannel index corresponds with the index of the HARQ response resource by a one-to-one mapping.
3) The HARQ response resource may be specified by upper layer signaling. The upper layer signaling is, for example, RRC signaling.
4) The HARQ response resource may be specified by PHY layer signaling. The PHY layer signaling is performed via, for example, DCI or SCI. Details of the HARQ response resource may be indicated via a PDSCH or PSSCH scheduled by the DCI or SCI.
5) The HARQ response resource may be specified by a combination of 1) to 4) described above.

The time domain of the HARQ response resource of the SL may be specified by the following methods 1) to 5).
1) Fixed timing offset specified in DCI that schedules the SL.
2) Fixed timing offset specified in SCI that schedules a PSSCH or SL associated with the SCI.
3) The HARQ response resource may be specified by upper layer signaling. The upper layer signaling is, for example, RRC signaling.
4) The HARQ response resource may be specified by PHY layer signaling. The PHY layer signaling is performed via, for example, DCI or SCI. Details of the HARQ response resource may be indicated via a PDSCH or PSSCH scheduled by the DCI or SCI.
5) The HARQ response resource may be specified by a combination of 1) to 4) described above.

Note that in the case where PUSCH or SL transmission resource (including a PSSCH and an associated PSCCH) is scheduled, the HARQ response resource may be transmitted using the PUSCH or SL transmission resource. In other words, in the case where the PUSCH or SL transmission resource (including a PSSCH and an associated PSCCH) is scheduled, the HARQ response resource specified by the methods described above may not be used.

In the following, the structure of a PSFCH will be described.

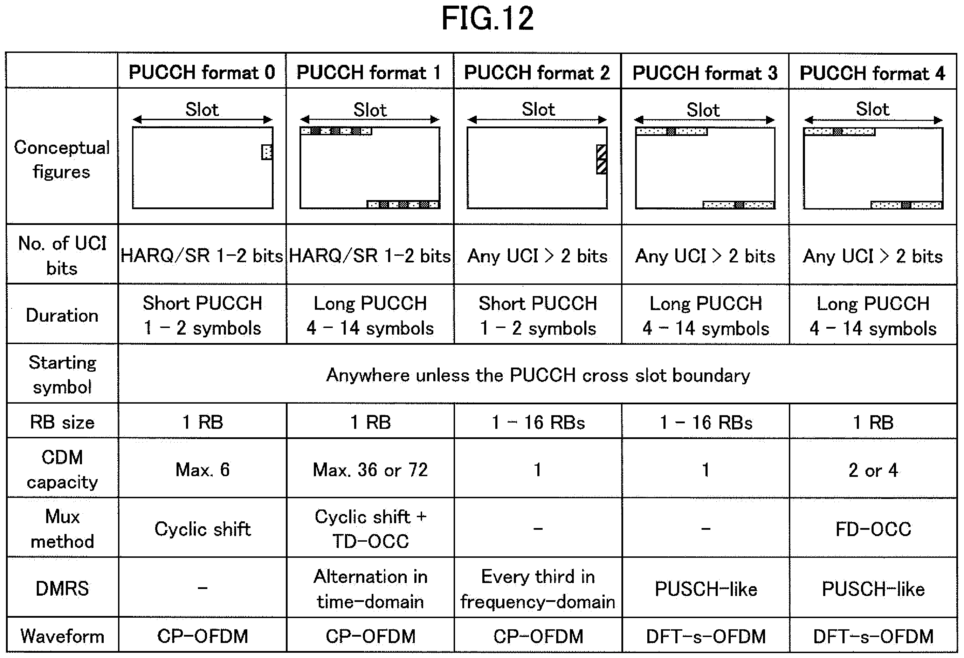

FIG. 12 is a diagram illustrating PUCCH formats. PSFCH formats may have structures similar to the PUCCH formats illustrated in FIG. 12. As for the PUCCH formats, PUCCH format 0 to PUCCH format 4 are defined as illustrated in FIG. 12, in terms of the number of bits, UCI (Uplink Control Information), duration, starting symbol, RB (Resource Block) size, CDM (Code division multiplexing) capacity, multiplexing method, DMRS (Demodulation reference signal), and waveform.

For example, a PSFCH resource set and a PSFCH resource may be similar to a PUCCH resource set and a PUCCH resource configured by an upper layer parameter. Alternatively, for example, the PSFCH resource set and the PSFCH resource may be configured separately from the PUCCH resource set and the PUCCH resource by the upper layer parameter.

RS configurations may be individually configured or defined in advance for each PSFCH format. Part of the configurations in the PSFCH format may be similar to those in the PUCCH format. For example, only the PUCCH format 0 to 2 may be applied to the PSFCH formats. This is because the waveform of the PUCCH formats 0 to 2 is CP-OFDM and the waveform of the PUCCH formats 3-4 is DFT-s-OFDM. Also, for example, the PSFCH formats may have similar configurations other than the waveform of the PUCCH formats. A setting in which DFT-s-OFDM in a PUCCH format is changed to CP-OFDM may be applied to a PSFCH format.

Alternatively, the PSFCH formats may also have structures different from those of the PUCCH formats. For example, the PSFCH formats may have structures similar to one other than the PSSCH and PSCCH channel coding methods.

A PSFCH may be used when transmitting a HARQ response of SL, an SR (Scheduling Request) of SL, or CSI (Channel State Information) of SL. An individual format of the PSFCH may support at least one of a HARQ response of SL, an SR (Scheduling Request) of SL, or CSI (Channel State Information) of SL.

In the following, a method of indicating a PSFCH resource for a HARQ response will be described. The PSFCH resource is specified in at least one of the time domain, the frequency domain, and the code domain.

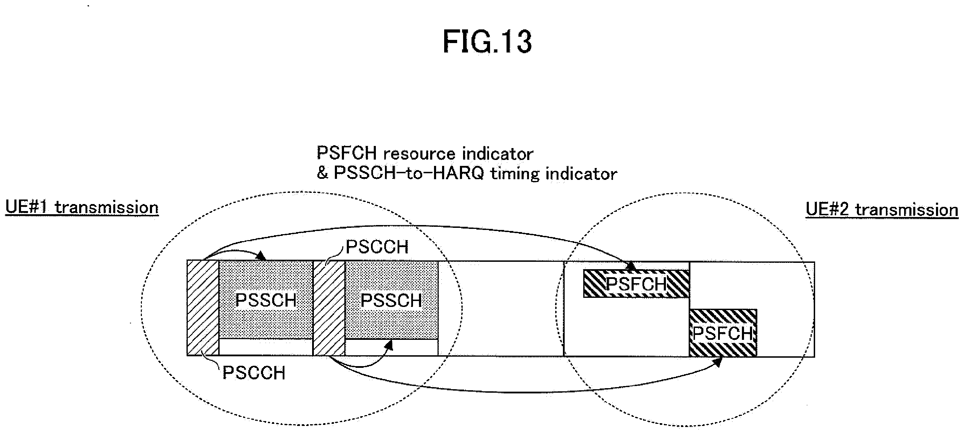

FIG. 13 is a diagram illustrating an example (1) of a HARQ response according to an embodiment of the present invention. As illustrated in FIG. 13, a PSFCH resource may be indicated by SCI included in a PSCCH as in the case of a PUCCH in NR. UE #1 transmits PSCCHs and PSSCHs to UE #2 and UE #2 transmits PSFCHs to UE #1. The user apparatus 20 that has received the SCI may report a corresponding HARQ response in the indicated PSFCH resource. The SCI that allocates a PSSCH may include a "PSFCH resource indicator" to indicate the PSFCH resource. The "PSFCH resource indicator" specifies one PSFCH resource included in a PSFCH resource set configured by an upper layer parameter.

The SCI that allocates a PSSCH may include a "PSCCH-to-HARQ feedback timing indicator" or a "PSSCH-to-HARQ feedback timing indicator" to indicate a slot to perform a HARQ response. The position of the slot to perform the HARQ response is counted starting from the next slot of the PSCCH or PSSCH.

The SCI may also include a "HARQ-ACK enabling indicator" that indicates whether to make the HARQ response enabled or disabled. Alternatively, information indicating whether to make the HARQ response enabled or disabled may be joint-encoded into the "PSFCH resource indicator", "PSCCH-to-HARQ feedback timing indicator", and/or "PSSCH-to-HARQ feedback timing indicator". For example, a state of part of the "PSFCH resource indicator" may be used for indicating whether the HARQ response is enabled or disabled. The above "indicators" may be derived from other SCI that grants DCI or SL transmission (PSCCH or PSSCH transmission).

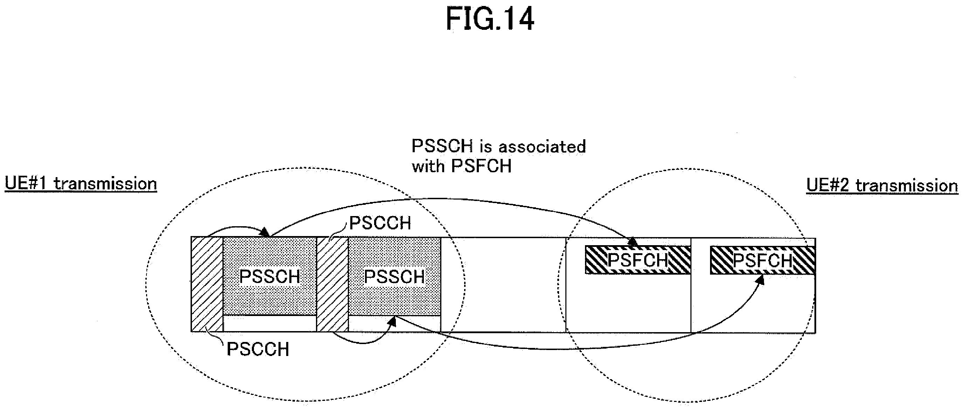

FIG. 14 is a diagram illustrating an example (2) of a HARQ response according to an embodiment of the present invention. As illustrated in FIG. 14, PSSCH or PSCCH resources may be associated with PSFCH resources. UE #1 transmits PSCCHs and PSSCHs to UE #2 and UE #2 transmits PSFCHs to UE #1. Further, PSSCH or PSCCH resources may be associated with the PSFCH formats. In other words, PSSCH or PSCCH resources may be used for implicitly indicating a configuration that includes a PSFCH resource or a PSFCH format.

The user apparatus 20 that has received the SCI may report a corresponding HARQ response in the PSFCH resource and the PSFCH format associated with the PSSCH or PSCCH resource. The association of the PSSCH or PSCCH with the PSFCH may be determined based on at least one of a minimum PRB, a maximum PRB, a minimum subchannel, a maximum subchannel, a leading symbol, and a tail symbol. Further, the timing of a PSFCH slot may be associated with the PSSCH or PSCCH resource, or the timing of a PSFCH slot may be indicated in the SCI format. The association of the PSSCH or PSCCH resource with the PSFCH resource and the PSFCH format may be configured or defined in advance.

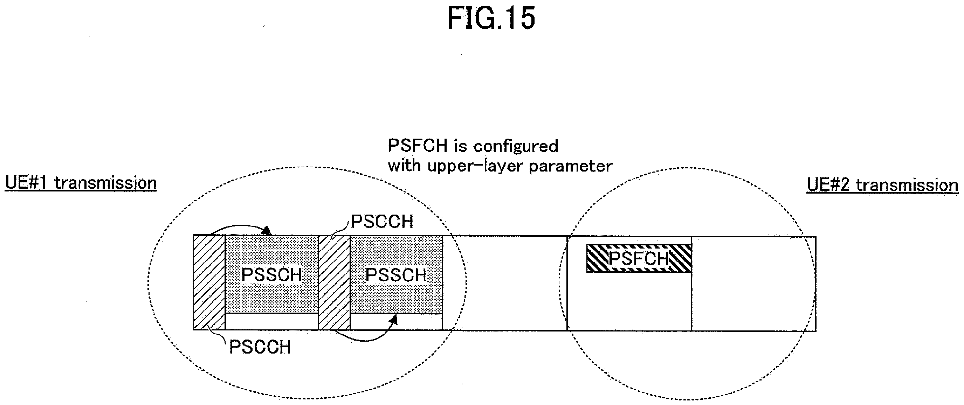

FIG. 15 is a diagram illustrating an example (3) of a HARQ response according to an embodiment of the present invention. As illustrated in FIG. 15, an upper layer parameter may configure a PSFCH resource and a PSFCH format to report a HARQ response. UE #1 transmits PSCCHs and PSSCHs to UE #2 and UE #2 transmits a PSFCH to UE #1.

The user apparatus 20 that has received the SCI may always report a corresponding HARQ response in the PSFCH resource and the PSFCH format configured by the upper layer parameter. Alternatively, the user apparatus 20 that has received the SCI may report a corresponding HARQ response in the PSFCH resource and the PSFCH format configured by the upper layer parameter if one or more of the following conditions 1) to 5) are satisfied.

1) A PSFCH configured by the upper layer parameter does not overlap another PSFCH.
2) A PSFCH configured by the upper layer parameter does not overlap a PSCCH or PSSCH.
3) The upper layer parameter indicates that the SCI format does not include a "PSFCH resource indicator" field.
4) The SCI format does not include a "PSFCH resource indicator" field.
5) HARQ response feedback is enabled.

Also, whether to make HARQ response feedback enabled or disabled may be configured by the upper layer parameter. Alternatively, if the PSFCH resource is configured, it is possible to define in advance that HARQ response feedback is implicitly enabled.

Note that the method of indicating a PSFCH resource to report a HARQ response corresponding to a unicast PSSCH may be different from the method of indicating a PSFCH resource to report a HARQ response corresponding to a groupcast PSSCH. For example, for a unicast PSSCH, the method of indicating a PSFCH resource illustrated in FIG. 13 may be used; and for a groupcast PSSCH, the method of indicating a PSFCH resource illustrated in FIG. 14 or FIG. 15 may be used.

Note that the method of indicating a PSFCH resource to report a HARQ response may be different between the side link transmission modes.

Note that in the case where the methods of indicating a PSFCH resource illustrated in FIG. 13, FIG. 14, and FIG. 15 are supported at the same time, an indication by the SCI may be prioritized to be applied, over a configuration by the upper layer or a configuration defined in advance.

According to the embodiments described above, it is possible for the user apparatus 20 to indicate a resource to report a HARQ response in sidelink communication by means of the SCI, PSSCH or PSCCH position, an upper layer parameter, or the like.

In other words, retransmission control can be performed appropriately in direct communication between terminals.

### (Apparatus configuration)

Next, an example of a functional configuration of the base station apparatus 10 and the user apparatus 20 to execute the processes and operations described above will be described. The base station apparatus 10 and the user apparatus 20 include the functions of implementing the application examples described above. However, each of the base station apparatus 10 and the user apparatus 20 may include only a part of the functions of the application examples.

### <Base station apparatus 10>

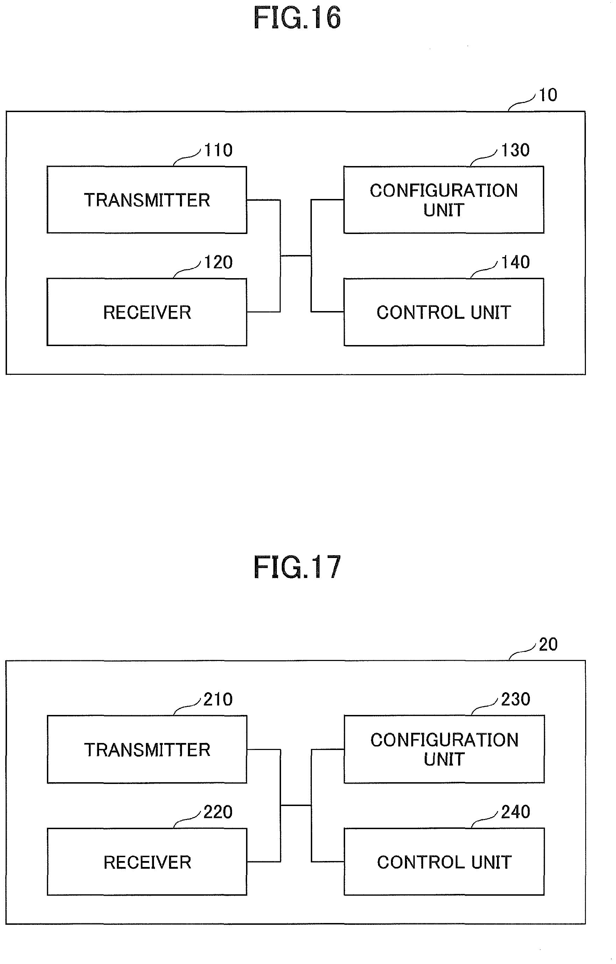

FIG. 16 is a diagram illustrating an example of a functional configuration of the base station apparatus 10. As illustrated in FIG. 16, the base station apparatus 10 includes a transmitter 110, a receiver 120, a configuration unit 130, and a control unit 140. The functional configuration illustrated in FIG. 16 is merely an example. Functional partitioning and names of the functional units may be determined discretionarily as long as operations can be executed according to the embodiments of the present invention.

The transmitter 110 includes a function of generating a signal to be transmitted to the user apparatus 20 and transmitting the signal wirelessly. The receiver 120 includes a function of receiving various signals transmitted from the user apparatus 20 and obtaining information on an upper layer, for example, from the received signal. The transmitter 110 also includes a function of transmitting NR-PSS, NR-SSS, NR-PBCH, DL/UL control signals, DL reference signals, and the like to the user apparatus 20.

The configuration unit 130 stores configuration information set in advance and various items of configuration information to be transmitted to the user apparatus 20 in a memory device and reads out the configuration information from the memory device as needed. The contents of the configuration information include, for example, information related to a configuration of D2D communication and the like.

As described in the application examples, the control unit 140 performs processing related to a configuration for the user apparatus 20 to perform D2D communication. Also, the control unit 140 transmits scheduling of D2D communication to the user apparatus 20 through the transmitter 110. A functional unit for transmitting signals in the control unit 140 may be included in the transmitter 110, and a functional unit for receiving signals in the control unit 140 may be included in the receiver 120.

### <User apparatus 20>

FIG. 17 is a diagram illustrating an example of a functional configuration of the user apparatus 20. As illustrated in FIG. 17, the user apparatus 20 includes a transmitter 210, a receiver 220, a configuration unit 230, and a control unit 240. The functional configuration illustrated in FIG. 17 is merely an example. Functional partitioning and names of the functional units may be determined discretionarily as long as operations can be executed according to the embodiments of the present invention.

The transmitter 210 generates a transmission signal from transmission data, to transmit the transmission signal wirelessly. The receiver 220 receives various signals wirelessly and obtains a signal of an upper layer from a received signal on the physical layer. Also, the receiver 220 includes a function of receiving NR-PSS, NR-SS, NR-PBCH, DL/UL/SL control signals, reference signals, or the like transmitted from the base station apparatus 10. Also, for example, the transmitter 210 transmits a PSCCH (Physical Sidelink Control Channel), PSSCH (Physical Sidelink Shared Channel), PSDCH (Physical Sidelink Discovery Channel), PSBCH (Physical Sidelink Broadcast Channel), or the like to other user apparatuses 20 as D2D communication, and the receiver 220 receives a PSSCCH, PSSCH, PSDCH, or PSBCH from another user apparatus 20.

The configuration unit 230 stores various items of configuration information received by the receiver 220 from the base station apparatus 10 or the user apparatus 20 in a memory device, and reads out the configuration information from the memory device as needed. The configuration unit 230 also stores configuration information set in advance. The contents of the configuration information include, for example, information related to a configuration of D2D communication and the like.

The control unit 240 controls D2D communication with the other user apparatuses 20 as described in the application examples. The control unit 240 also performs processing related to the HARQ of D2D communication. In addition, the control unit 240 may perform scheduling of the D2D communication applied to the other user apparatuses 20. A functional unit for transmitting signals in the control unit 240 may be included in the transmitter 210, and a functional unit for receiving signals in the control unit 240 may be included in the receiver 220.

### (Hardware configuration)

The block diagrams (FIGs. 16 and 17) used for describing the above embodiments show blocks in functional units. These functional blocks (components) are implemented by any combination of hardware and/or software. Further, the method of implementing the functional blocks is not limited in particular. In other words, each functional block may be implemented by using one device that is physically or logically coupled, or two or more devices that are physically or logically separated may be connected directly or indirectly (e.g., by wire or wirelessly) so as to implement the functional block. The functional blocks may be implemented by one or more of the above devices in combination with software.

Functions include, but are not limited to, judgment, decision, determination, calculation, computation, processing, derivation, investigation, search, confirmation, reception, transmission, output, access, resolution, selection, choice, establishment, comparison, assumption, expectation, deeming, broadcasting, notifying, communicating, forwarding, configuring, reconfiguring, allocating, mapping, and assigning. For example, a functional block (component) that implements a function of transmission may be referred to as a transmitting unit or a transmitter. In any case, as described above, implementation methods are not limited in particular.

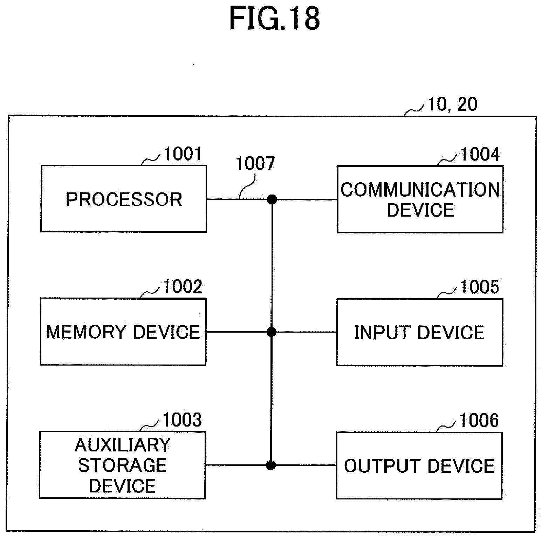

For example, the base station apparatus 10, the user apparatus 20, or the like in an embodiment of the present disclosure may function as a computer that processes a wireless communication method of the present disclosure. FIG. 18 is a diagram illustrating an example of a hardware configuration of the base station apparatus 10 or the user apparatus 20 according to an embodiment of the present invention. The base station apparatus 10 and user apparatus 20 described above may be physically configured as a computer device that includes a processor 1001, a memory device 1002, an auxiliary storage device 1003, a communication device 1004, an input device 1005, an output device 1006, and a bus 1007.

Note that in the following description, the term "apparatus" can be read as a circuit, device, unit, or the like. The hardware configuration of the base station apparatus 10 and the user apparatus 20 may be configured to include one or more of the devices illustrated in the drawings or may be configured without including some of the devices.

Each function in the base station apparatus 10 and the user apparatus 20 is implemented by loading predetermined software (a program) on the hardware such as the processor 1001 and the memory device 1002 so as to cause the processor 1001 to execute operations, to control communication by the communication device 1004, and to control at least one of reading and writing data in the memory device 1002 and the auxiliary storage device 1003.

The processor 1001 controls the entire computer, for example, by causing an operating system to run. The processor 1001 may be constituted with a central processing unit (CPU) that includes interfaces with peripheral devices, a controller, an arithmetic/logic unit, registers, and the like. For example, the control unit 140, the control unit 240, and the like described above may be implemented by the processor 1001.

The processor 1001 also reads a program (a program code), a software module, data, and the like from at least one of the auxiliary storage device 1003 and the communication device 1004 to the memory device 1002 to perform various processes in accordance with these. As a program, a program that causes the computer to execute at least some of the operations described in the above embodiments is used. For example, the control unit 140 of the base station apparatus 10 illustrated in FIG. 16 may be implemented by a control program that is stored in the storage device 1002 and runs on the processor 1001. Also, for example, the control unit 240 of the user apparatus 20 illustrated in FIG. 17 may be implemented by a control program that is stored in the storage device 1002 and runs on the processor 1001. Although the various processes described above are assumed to be executed by the single processor 1001, these may be executed simultaneously or sequentially by two or more processors 1001. The processor 1001 may be implemented by one or more chips. Note that the program may be transmitted from a network via a telecommunication line.

The memory device 1002 is a computer-readable recording medium, and may be constituted with, for example, at least one of a ROM (Read-Only Memory), an EPROM (Erasable Programmable ROM), an EEPROM (Electrically Erasable Programmable ROM), a RAM (Random Access Memory), and the like. The memory device 1002 may be referred to as a register, a cache, a main memory (a main memory device), or the like. The memory device 1002 is capable of storing a program (a program code), a software module, and the like that are executable to implement the communication method according to an embodiment of the present disclosure.

The auxiliary storage device 1003 is a computer-readable recording medium and may be constituted with, for example, at least one of an optical disk such as a CD-ROM (Compact Disc ROM), a hard disk drive, a flexible disk, an optical magnetic disk (e.g., a compact disk, a digital versatile disk, a Blu-ray (registered trademark) disk, a smart card, a flash memory (e.g., a card, a stick, and a key drive), a floppy (registered trademark) disk, a magnetic strip, and the like. The recording medium described above may be, for example, a database, a server, or any other suitable medium that includes at least one of the memory device 1002 and the auxiliary storage device 1003.

The communication device 1004 is hardware (a transceiver device) for communicating with computers via at least one of a wired network and a wireless network, and is also referred to as, for example, a network device, a network controller, a network card, a communication module, and the like. The communication device 1004 may be configured to include, for example, a radiofrequency switch, a duplexer, a filter, a frequency synthesizer, and the like, for example, to implement at least one of a frequency division duplex (FDD) and a time division duplex (TDD). For example, a transmitting and receiving antenna, an amplifier, a transceiver, a transmission line interface, and the like may be implemented by the communication device 1004. The transceiver may be implemented by a transmitter and a receiver that are physically or logically separated.

The input device 1005 is an input device (e.g., a keyboard, a mouse, a microphone, a switch, a button, a sensor, etc.) to receive input from the outside. The output device 1006 is an output device (e.g., a display, a speaker, an LED lamp, etc.) to execute outputting to the outside. Note that the input device 1005 and the output device 1006 may have an integrated configuration (e.g., a touch panel).

Each of the devices such as the processor 1001 and the memory device 1002 is connected via the bus 1007 for communicating information. The bus 1007 may be configured by using a single bus or may be configured by using different buses between specific devices.

The base station apparatus 10 and the user apparatus 20 may also be configured to include hardware such as a microprocessor, a digital signal processor (DSP), an ASIC (Application Specified Circuit), a PLD (Programmable Logic Device), and an FPGA (Field Programmable Gate Array), and with such hardware, some of or all of the functional blocks may be implemented. For example, the processor 1001 may be implemented by using at least one of these hardware components.

### (Summary of embodiments)

As described above, according to an embodiment of the present invention, a user apparatus is provided that includes a transmitter configured to perform transmission to another user apparatus via a control channel and a data channel; a receiver configured to receive a HARQ (Hybrid automatic repeat request) response to the transmission from the other user apparatus; and a control unit configured to indicate to the other user apparatus, information related to a resource of a channel to receive the HARQ response, and to perform retransmission control related to the transmission based on the HARQ response.

The above configuration enables the user apparatus 20 to indicate a resource to report a HARQ response in the sidelink communication by means of the SCI, PSSCH or PSCCH position, an upper layer parameter, and the like. In other words, retransmission control can be performed appropriately in direct communication between terminals.

The information related to the resource of the channel to receive the HARQ response may specify at least one of the time domain, frequency domain, and code domain of the resource of the channel to receive the HARQ response. This configuration enables the user apparatus 20 to indicate the resource to report a HARQ response in the sidelink communication by the SCI.

The control unit may indicate the information related to the resource of the channel to receive the HARQ response, to the other user apparatus via the control channel. This configuration enables the user apparatus 20 to indicate the resource to report a HARQ response in the sidelink communication by the SCI.

The control unit may further indicate information representing whether a HARQ response is enabled or disabled, to the other user apparatus via the control channel. This configuration enables the user apparatus 20 to indicate whether a HARQ response is enabled or disabled by the SCI.

The control unit may also implicitly indicate to the other user apparatus, the information related to the resource of the channel to receive the HARQ response, by associating the resource of the control channel or the data channel with the resource of the channel to receive the HARQ response. This configuration enables the user apparatus 20 to indicate the resource to report a HARQ response in the sidelink communication, by the position of the PSSCH or PSCCH.

The control unit may also transmit, as the information related to the resource of the channel to receive the HARQ response, information that does not include a field indicating a resource of a channel to receive a HARQ response via the control channel, to indicate to the other user apparatus that the resource of the channel to receive the HARQ response is configured by an upper layer parameter. This configuration enables the user apparatus 20 to indicate the resource to report a HARQ response in the sidelink communication, by the upper layer parameter.

### (Supplement to embodiments)

As above, the embodiment of the present invention has been described; note that the disclosed invention is not limited to the embodiments, and those skilled in the art would understand various modifications, revisions, alternatives, substitutions, and the like. Although the description has been made by using specific numerical examples to facilitate understanding of the invention, unless otherwise stated, these values are merely examples and any suitable values may be used. Partitioning of the items in the above description is not essential to the present invention, and matters described in two or more items may be used in combination as needed, or a matter described in one item may be applied to another matter described in another item (as long as no inconsistency is introduced). The boundaries of functional units or processing units in the functional block diagrams do not necessarily correspond to the physical boundaries of parts. The operations of the multiple functional units may be performed on a single physical part, or the operation of one functional unit may be performed on multiple physical parts. As for the processing steps described in the embodiments, the order of steps may be exchanged as long as no inconsistency is introduced. Although for the sake of convenience of describing processes, the base station apparatus 10 and the user apparatus 20 have been described by using the functional block diagrams, these apparatuses may be implemented by hardware, software, or a combination of these. The software executed by the processor included in the base station apparatus 10 according to the embodiment of the present invention and the software executed by the processor included in the user apparatus 20 according to the embodiment of the present invention, may be stored, respectively, in a random access memory (RAM), a flash memory, a read-only memory (ROM), an EPROM, an EEPROM, a register, a hard disk (HDD), a removable disk, a CD-ROM, a database, a server, or any other suitable recording medium.

Indication of information is not limited to the aspects and the embodiments described in the present disclosure, and may be done by using other methods. For example, indication of information may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block)), other signals, or a combination of these. Also, RRC signaling may also be referred to as an RRC message, and may also be, for example, an RRC connection setup message, an RRC connection reconfiguration message, or the like.

The aspects and the embodiments described in the present disclosure may be applied to at least one of systems utilizing LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi) (registered trademark), IEEE 802.16 (WiMAX) (registered trademark), IEEE 802.20, UWB (Ultra-WideBand), Bluetooth (registered trademark), and other suitable systems and next-generation systems extended based on these systems. Also, multiple systems may also be combined (e.g., a combination of at least one of LTE and LTE-A with 5G, etc.) to be applied.

The processing steps, sequences, flowcharts, and the like of the aspects and the embodiments described in the present description may be reordered as long as no inconsistency is introduced. For example, a method described in the present disclosure presents elements of various steps using an exemplary order, and is not limited to the particular order presented.

A specific operation described in the present description to be performed by the base station apparatus 10 may be performed by its upper node, depending on circumstances. In a network constituted with one or more network nodes having the base station apparatus 10, it is apparent that various operations performed for communication with the user apparatuses 20 may be performed by at least one of the base station apparatus 10 and other network nodes (for example, an MME or an S-GW may be considered, but not limited to these) other than the base station apparatus 10. In the above description, although a case has been exemplified in which there is a single network node other than the base station apparatus 10, the other network nodes may be a combination of multiple other network nodes (e.g., MME and S-GW).

Information, signals, and the like described in the present disclosure may be output from an upper layer (or a lower layer) to a lower layer (or an upper layer). These may be input and output through multiple network nodes.

Information that has been input or output may be stored in a specific position (e.g., memory) or managed by using a management table. Information to be input or output may be overwritten, updated, or added. Information that has been output may be deleted. Information that has been input may be transmitted to other devices.

A determination in the present disclosure may be performed based on a value (0 or 1) represented by one bit; may be performed based on a Boolean value (true or false); or may be performed based on comparison with a numerical value (e.g., comparison with a predetermined value).

Regardless of whether it is referred to as software, firmware, middleware, a microcode, a hardware description language, or any other name, software should be broadly interpreted to mean instructions, an instruction set, a code, a code segment, a program code, a program, a subprogram, a software module, an application, a software application, a software package, a routine, a subroutine, an object, an executable file, a thread, a procedure, a function, and the like.

Also, software, instructions, information, and the like may also be transmitted and received via a transmission medium. For example, if the software is transmitted from a web site, a server, or another remote source by using at least one of a wired technology (coaxial cable, optical fiber cable, twisted pair, digital subscriber line (DSL: Digital Subscriber Line), etc.) and a wireless technology (infrared, microwave, etc.), at least one of these wired technologies and wireless technologies is included in the definition of a transmission medium.

The information, signals, and the like described in the present disclosure may be represented by using any of a variety of different technologies. For example, data, an instruction, a command, information, a signal, a bit, a symbol, a chip, or the like, which may be mentioned throughout the entire description, may be represented by a voltage, a current, an electromagnetic wave, a magnetic field, magnetic particles, an optical field, or photons, or any combination of these.

A term described in the present disclosure and a term necessary for understanding the present disclosure may be replaced by a term having the same or similar meaning. For example, at least one of a channel and a symbol may be a signal (or signaling). Also, a signal may be a message. Also, a component carrier (CC) may also be referred to as a carrier frequency, a cell, a frequency carrier, or the like.

The terms "system" and "network" as used in the present disclosure may be used interchangeably.

Also, information, a parameter, or the like described in the present disclosure may be represented by using an absolute value, may be represented by using a relative value from a predetermined value, or may be represented by using corresponding other information. For example, a radio resource may be one indicated by an index.

A name used for a parameter described above is not a limited name in any respect. Furthermore, a mathematical expression using such parameters may differ from that explicitly disclosed in the present disclosure. Since various channels (e.g., PUCCH, PDCCH, etc.) and information elements can be identified by all suitable names, the various names assigned to these various channels and information elements are not limited names in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell", "cell group", "carrier", and "component carrier" may be used interchangeably. A base station may be referred to as another term such as a macro cell, a small cell, a femtocell, a pico cell, or the like.

A base station may accommodate one or more (e.g., three) cells. When a base station accommodates multiple cells, the entire coverage area of the base station may be divided into multiple smaller areas, and each of the smaller areas may also provide communication services by a base station subsystem (e.g., an indoor small base station (RHH: Remote Radio Head)). The term "cell" or "sector" indicates a part or the entirety of the coverage area of at least one of the base stations and base station subsystems providing communications services in this coverage.

In the present disclosure, terms such as "mobile station (MS: Mobile Station)", "user terminal", "user apparatus (or UE: User Equipment)", and "terminal" may be used interchangeably.

A mobile station may be referred to by an ordinary skilled person in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or any other suitable term.

At least one of the base station and the mobile station may be referred to as a transmission apparatus, a reception apparatus, a communication apparatus, or the like. Note that at least one of the base station and the mobile station may be a device mounted on a mobile body, the mobile body itself, or the like. The mobile body may be a means of transportation (e.g., an automobile, an airplane, etc.), an unmanned mobile body (e.g., a drone, an autonomous vehicle, etc.), or a robot (a manned or unmanned type). Note that at least one of the base station and the mobile station includes an apparatus that does not necessarily move during a communication operation. For example, at least one of the base station and the mobile station may be an IoT (Internet of Things) device such as a sensor.

In addition, the base station in the present disclosure may be read as a user terminal. For example, the aspects and embodiments of the present disclosure may be applied to a configuration in which communication between a base station and a user terminal is replaced by communication between multiple user apparatuses 20 (may be referred to as, for example, D2D (Device-to-Device), V2X (Vehicleto-Everything)). In this case, a configuration may be adopted in which the functions included in the above base station apparatus 10 are included in the user apparatus 20. In addition, the words "uplink" and "downlink" may be read as a wording corresponding to communication between terminals (for example, "side"). For example, an uplink channel, a downlink channel, or the like may be read as a side channel.

Similarly, a user terminal in the present disclosure may be read as a base station. In this case, a configuration may be adopted in which the functions included in the user terminal described above are included in the base station.

The terms "determination (or determining)" and "decision (or determining)" used in the present disclosure may encompass a wide variety of operations. For example, "determination" and "decision" may include "determination" and "decision" made with judging, calculating, computing, processing, deriving, investigating, searching (looking up, search, inquiry) (e.g., search in a table, a database, or another data structure), or ascertaining. Also, "determination" and "decision" may include "determination" and "decision" made with, for example, receiving (e.g., receiving information), transmitting (e.g., transmitting information), input, output, or accessing (e.g., accessing data in a memory). Also, "determination" and "decision" may include "determination" and "decision" made with resolving, selecting, choosing, establishing, or comparing. In other words, "determination" and "decision" may include "determination" and "decision" made with a certain action. Also, "determination" and "decision" may be read as "assuming", "expecting", "considering", or the like.

The terms "connected", "coupled", or every variation of these means any direct or indirect connection or coupling between two or more elements, and may encompass a presence of one or more intermediate elements between two elements "connected" or "coupled" to each other. The coupling or connection between elements may be physical, logical, or a combination of these. For example, "connection" may be read as "access". When used in the present disclosure, such two elements may be considered to be "connected" or "coupled" each other by using at least one of one or more wires, cables, and printed electrical connections, or by using, as several non-restrictive and noncomprehensive examples, electromagnetic energy having a wavelength of a radio frequency domain, a microwave domain, light (both visible and invisible), and the like.

A reference signal may be abbreviated as an RS (Reference Signal) and may be referred to as a pilot depending on the standard to be applied.

A description using "based on" in the present disclosure does not mean "based only on" unless otherwise specified. In other words, "based on" means both "based only on" and "based at least on".

Any reference to elements specified with the words "first", "second", and so on used in the present disclosure does not limit the amount or the sequence of these elements in general. These words may be used in the present disclosure as a convenient way for distinguishing two or more elements among each other. Therefore, a reference to first and second elements does not mean that only the two elements are assumed, or that the first element should be considered to precede the second element in some way.

A "means" in the configuration of each of the devices described above may be replaced by "unit", "circuit", "device", and the like.

In the present disclosure, when the terms "include", "including", and variations of these are used, it is intended that these terms are as comprehensive as the term "comprising". Further, it is intended that the term "or" used in the present disclosure is not an exclusive OR.

A radio frame may be constituted with one or more frames in the time domain. In the time domain, each of the one or more frames may be referred to as a subframe. The subframe may be further constituted with one or more slots in the time domain. The subframe may have a fixed time length (e.g., 1 ms) that does not depend on the numerology.

The numerology may include a communication parameter that is applied to at least one of transmission and reception of a signal or a channel. The numerology may present, for example, at least one of subcarrier spacing (SCS), bandwidth, symbol length, cyclic prefix length, transmission time interval (TTI), number of symbols per TTI, radio frame configuration, specific filtering performed by a transceiver in the frequency domain, specific windowing performed by a transceiver in the time domain, and the like.

A slot may be constituted with, in the time domain, one or more symbols (OFDM (Orthogonal Frequency Division Multiplexing) symbols, SC-FDMA (Single Carrier Frequency Division Multiplexing) symbols) symbols, or the like). A slot may be a unit of time based on the numerology.

A slot may include multiple mini slots. Each mini slot may be constituted with one or more symbols in the time domain. A mini slot may also be referred to as a subslot. A mini slot may be constituted with a fewer number of symbols than a slot. PDSCH (or PUSCH) transmitted with a unit of time greater than a mini slot may also be referred to as PDSCH (or PUSCH) mapping type A. PDSCH (or PUSCH) transmitted by using mini slots may also be referred to as PDSCH (or PUSCH) mapping type B.

Any one of a radio frame, a subframe, a slot, a mini slot, and a symbol represents a unit of time when transmitting a signal. Different names may be used for a radio frame, a subframe, a slot, a mini slot, and a symbol, respectively.

For example, one subframe may be referred to as a transmission time interval (TTI); multiple consecutive subframes may be referred to as a TTI; and one slot or one mini slot may be referred to as a TTI. In other words, at least one of the subframe and the TTI may be a subframe (1 ms) in the existing LTE, may be a period shorter than 1 ms (e.g., 1 to 13 symbols), and may be a period longer than 1 ms. Note that the unit representing TTI may also be referred to as slot, mini slot, or the like.

Here, the TTI means, for example, a minimum unit of time of scheduling in radio communication. For example, in an LTE system, a base station performs scheduling by units of TTIs for each user apparatus 20 to allocate a radio resource (such as frequency bandwidth, transmission power, etc., that can be used by each user apparatus 20). However, the definition of a TTI is not limited as such.

TTI may be a unit of time to transmit channel-coded data packets (transport blocks), code blocks, code words, and the like, or may be a unit of processing such as scheduling, link adaptation, and the like. Note that when a TTI is given, a time interval (e.g., the number of symbols) to which transport blocks, code blocks, code words, or the like are actually mapped may be shorter than the TTI.

In the case where one slot or one mini slot is referred to as a TTI, one or more TTIs (i.e., one or more slots or one or more mini slots) may be a minimum unit of time of scheduling. Also, the number of slots (the number of mini slots) constituting the minimum unit of time of scheduling may be controlled.

A TTI having a time length of 1 ms may be referred to as an ordinary TTI (a TTI in LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial TTI (or fractional TTI), a shortened subframe, a short subframe, a mini slot, a subslot, a slot, or the like.

Note that a long TTI (e.g., an ordinary TTI, a subframe, etc.) may be read as a TTI having a time length exceeding 1 ms, and a short TTI (e.g., a shortened TTI, etc.) may be read as a TTI having a TTI length shorter than that of a long TTI and longer than or equal to 1 ms.

A resource block (RB) is a unit of resource allocation in the time domain and in the frequency domain, and may include one or more consecutive subcarriers in the frequency domain. The number of subcarriers included in an RB may be the same regardless of the numerology, which may be, for example, 12. The number of subcarriers included in an RB may be determined based on the numerology.

Also, an RB in the time domain may include one or more symbols, and may have a length of one mini slot, one subframe, or one TTI. One TTI, one subframe, and the like may be constituted with one or more resource blocks, respectively.

Note that one or multiple RBs may be referred to as physical resource blocks (PRB), a subcarrier group (SCG), a resource element group (REG), a PRB pair, an RB pair, or the like.

Also, a resource block may be constituted with one or more resource elements (RE). For example, one RE may be a radio resource area of one subcarrier and one symbol.

A bandwidth part (BWP, which may be referred to as a partial bandwidth, etc.) may represent a subset of consecutive common RB (common resource blocks) in terms of certain numerology in a certain carrier. Here, a common RB may be specified by an RB index with reference to a common reference point in the carrier. PRB may be defined in a BWP to be numbered in the BWP.

BWP may include a BWP for UL (UL BWP) and a BWP for DL (DL BWP). For a UE, one or more BWPs may be set in one carrier.

At least one of the set BWPs may be active, and a UE does not need to assume transmission and reception of a predetermined signal/channel outside the active BWP. Note that "cell", "carrier", or the like in the present disclosure may be read as "BWP".

The structures of radio frames, subframes, slots, mini slots, symbols, and the like described above are merely examples. For example, configurations of the number of subframes included in a radio frame; the number of slots per subframe or radio frame; the number of mini slots included in a slot; the number of symbols and RBs included in a slot or a mini slot; the number of subcarriers included in an RB; the number of symbols included in a TTI; the symbol length; the length of cyclic prefix (CP); and the like, can be changed in various ways.

In the present disclosure, in the case where an article, for example, "a", "an", or "the" in English, is added by translation, the present disclosure may include a plural form the noun following these articles.

In the present disclosure, the term "A and B are different" may mean "A and B are different from each other". The term may mean "A and B are different from C, respectively". Terms such as "separate" and "coupled" may also be interpreted in the same way as "different."

The aspects and embodiments described in the present disclosure may be used individually, may be combined to be used, or may be switched during execution to be used. Indication of predetermined information (e.g., indication of "being X") is not limited to an explicit indication, and may be done implicitly (e.g., by not indicating the predetermined information).

Note that in the present disclosure, sidelink communication is an example of direct communication between terminals. The PSCCH is an example of a control channel. The PSSCH is an example of a data channel. The PSFCH is an example of a channel to receive a HARQ response.

As above, the present disclosure has been described in detail; note that it is apparent to those skilled in the art that the disclosure is not limited to the embodiments described in the present disclosure. The scope of protection is defined by the appended claims.

Accordingly, the description of the present disclosure is intended for illustrative purposes and does not have any restrictive meaning with respect to the present disclosure.

### DESCRIPTION OF REFERENCE SIGNS

10 base station apparatus
110 transmitter
120 receiver
130 configuration unit
140 control unit
20 user apparatus
210 transmitter
220 receiver
230 configuration unit
240 control unit
1001 processor
1002 memory device
1003 auxiliary storage device
1004 communication device
1005 input device
1006 output device

## Claims

1. A terminal (20) comprising:
a receiver (220) configured to receive, from another terminal, control information and a Physical Sidelink Shared Channel, PSSCH, scheduled by the control information;
a controller (240) configured to determine a resource of a feedback channel associated with the PSSCH; and
a transmitter (210) configured to transmit, to the another terminal via the feedback channel, a hybrid automatic repeat request, HARQ, response corresponding to the PSSCH,
wherein the controller (240) is configured to determine, based on a subchannel of the PSSCH, the resource of the feedback channel.

2. The terminal (20) according to claim 1, wherein the controller (240) is configured to determine, based on a starting position of the PSSCH, the resource of the feedback channel.

3. The terminal (20) according to claim 1, wherein the controller (240) is configured to determine, based on a minimum subchannel or a maximum subchannel of the PSSCH, the resource of the feedback channel.

4. The terminal (20) according to claim 1,
wherein the control information includes an indicator indicating whether the HARQ response is enabled or disabled, and
wherein the transmitter (210) is configured to transmit, based on the indicator indicating that the HARQ response is enabled, the HARQ response corresponding to the PSSCH.

5. The terminal (20) according to claim 1,
wherein the receiver (220) is configured to receive, from a base station (10), an upper layer parameter indicating whether the HARQ response is enabled or disabled, and
wherein the transmitter (210) is configured to transmit, based on the upper layer parameter indicating that the HARQ response is enabled, the HARQ response corresponding to the PSSCH.

6. The terminal (20) according to claim 1, wherein configurations of a format of the feedback channel uses at least a part of configurations of an uplink control channel.

7. A communication method performed by a terminal (20) comprising:
receiving, from another terminal, control information and a Physical Sidelink Shared Channel, PSSCH, scheduled by the control information;
determining a resource of a feedback channel associated with the PSSCH; and
transmitting, to the another terminal via the feedback channel, a hybrid automatic repeat request, HARQ, response corresponding to the PSSCH,
wherein the determining determines, based on a subchannel of the PSSCH, the resource of the feedback channel.

## Patentansprüche

1. Endgerät (20), umfassend:
einen Empfänger (220), der konfiguriert ist, um von einem anderen Endgerät Steuerinformationen und einen gemeinsam genutzten physikalischen Nebenkanal (Physical Sidelink Shared Channel, PSSCH) zu empfangen, der durch die Steuerinformationen geplant wird;
eine Steuereinheit (240), die konfiguriert ist, um eine Ressource eines Rückkopplungskanals zu bestimmen, der mit dem PSSCH verbunden ist; und
einen Sender (210), der konfiguriert ist, um über den Rückkanal eine hybride automatische Wiederholungsanforderung (HARQ), die dem PSSCH entspricht, an das andere Endgerät zu senden,
wobei die Steuereinheit (240) konfiguriert ist, um auf der Grundlage eines Unterkanals des PSSCH die Ressource des Rückkanals zu bestimmen.

2. Endgerät (20) nach Anspruch 1, wobei die Steuereinheit (240) konfiguriert ist, um auf der Grundlage einer Startposition des PSSCH die Ressource des Rückkanals zu bestimmen.

3. Endgerät (20) nach Anspruch 1, wobei die Steuereinheit (240) konfiguriert ist, um auf der Grundlage eines minimalen Unterkanals oder eines maximalen Unterkanals des PSSCH die Ressource des Rückkanals zu bestimmen.

4. Endgerät (20) nach Anspruch 1,
wobei die Steuerinformationen einen Indikator einschließen, der anzeigt, ob die HARQ-Antwort aktiviert oder deaktiviert ist, und
wobei der Sender (210) konfiguriert ist, um auf der Grundlage des Indikators, der anzeigt, dass die HARQ-Antwort aktiviert ist, die dem PSSCH entsprechende HARQ-Antwort zu senden.

5. Endgerät (20) nach Anspruch 1,
wobei der Empfänger (220) konfiguriert ist, um von einer Basisstation (10) einen Parameter der oberen Schicht zu empfangen, der anzeigt, ob die HARQ-Antwort aktiviert oder deaktiviert ist, und
wobei der Sender (210) konfiguriert ist, um auf der Grundlage des Parameters der oberen Schicht, der anzeigt, dass die HARQ-Antwort aktiviert ist, die dem PSSCH entsprechende HARQ-Antwort zu senden.

6. Endgerät (20) nach Anspruch 1, wobei die Konfigurationen eines Formats des Rückkanals zumindest einen Teil der Konfigurationen eines Uplink-Kontrollkanals verwenden.

7. Kommunikationsverfahren, das von einem Endgerät (20) durchgeführt wird, umfassend:
Empfangen von Steuerinformationen von einem anderen Endgerät und eines gemeinsam genutzten physikalischen Nebenkanals (Physical Sidelink Shared Channel, PSSCH), der durch die Steuerinformationen geplant wird;
Bestimmen einer Ressource eines Rückkopplungskanals, der mit dem PSSCH verbunden ist; und
Senden einer hybriden automatischen Wiederholungsanforderung (HARQ), die dem PSSCH entspricht, an das andere Endgerät über den Rückkanal,
wobei das Bestimmen auf der Grundlage eines Unterkanals des PSSCH die Ressource des Rückkanals bestimmt.

## Revendications

1. Terminal (20) comprenant :
un récepteur (220) configuré pour recevoir, en provenance d'un autre terminal, des informations de commande et un canal physique partagé de liaison latérale, PSSCH, programmé par les informations de commande ;
un dispositif de commande (240) configuré pour déterminer une ressource d'un canal de retour associé au PSSCH ; et
un émetteur (210) configuré pour transmettre, à l'autre terminal via le canal de retour, une réponse de demande de répétition automatique hybride, HARQ, correspondant au PSSCH,
dans lequel le dispositif de commande (240) est configuré pour déterminer, sur la base d'un sous-canal du PSSCH, la ressource du canal de retour.

2. Terminal (20) selon la revendication 1, dans lequel le dispositif de commande (240) est configuré pour déterminer, sur la base d'une position de départ du PSSCH, la ressource du canal de retour.

3. Terminal (20) selon la revendication 1, dans lequel le dispositif de commande (240) est configuré pour déterminer, sur la base d'un sous-canal minimal ou d'un sous-canal maximal du PSSCH, la ressource du canal de retour.

4. Terminal (20) selon la revendication 1,
dans lequel les informations de commande incluent un indicateur indiquant si la réponse de HARQ est activée ou désactivée, et
dans lequel l'émetteur (210) est configuré pour transmettre, sur la base de l'indicateur indiquant que la réponse de HARQ est activée, la réponse de HARQ correspondant au PSSCH.

5. Terminal (20) selon la revendication 1,
dans lequel le récepteur (220) est configuré pour recevoir, en provenance d'une station de base (10), un paramètre de couche supérieure indiquant si la réponse de HARQ est activée ou désactivée, et
dans lequel l'émetteur (210) est configuré pour transmettre, sur la base du paramètre de couche supérieure indiquant que la réponse de HARQ est activée, la réponse de HARQ correspondant au PSSCH.

6. Terminal (20) selon la revendication 1, dans lequel des configurations d'un format du canal de retour utilisent au moins une partie de configurations d'un canal de commande de liaison montante.

7. Procédé de communication mis en oeuvre par un terminal (20) comprenant :
la réception, en provenance d'un autre terminal, d'informations de commande et d'un canal physique partagé de liaison latérale, PSSCH, programmé par les informations de commande ;
la détermination d'une ressource d'un canal de retour associé au PSSCH ; et
la transmission, à l'autre terminal via le canal de retour, d'une réponse de demande de répétition automatique hybride, HARQ, correspondant au PSSCH,
dans lequel la détermination détermine, sur la base d'un sous-canal du PSSCH, la ressource du canal de retour.
